(19) **Europäisches Patentamt**
**European Patent Office**
**Office européen des brevets**

(11) **EP 3 035 583 A1**

(12) **DEMANDE DE BREVET EUROPEEN**

(43) Date de publication:
**22.06.2016 Bulletin 2016/25**

(51) Int Cl.:
***H04L 9/06*** (2006.01)

(21) Numéro de dépôt: **14199456.6**

(22) Date de dépôt: **19.12.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Nagravision S.A.**
**1033 Cheseaux-sur-Lausanne (CH)**

(72) Inventeur: **Gremaud, Fabien**
**1618 Châtel-St-Denis (CH)**

(74) Mandataire: **Leman Consulting S.A.**
**Chemin de Précossy 31**
**1260 Nyon (CH)**

(54) **Dispositif et système de communication, méthode de traitement de données et méthode d'échange sécurisé de données**

(57) La présente invention concerne une méthode de traitement de données dans un dispositif de communication comportant un hôte et un module de sécurité associé à cet hôte. Cette méthode comporte les étapes de génération par le module de sécurité, d'une pluralité de clés initiales à partir d'une fonction de génération de clés initiales; de transmission de ladite pluralité de clés initiales audit hôte correspondant. Pour chaque clé initiale reçue par l'hôte, elle comporte une étape de génération d'une pluralité de clés de chiffrement par un module d'extension dudit hôte, au moyen d'une fonction d'extension. La méthode comporte en outre les étapes de réception des données à traiter par ledit hôte et de combinaison desdites données à traiter avec lesdites clés de chiffrement, dans un module de combinaison dudit hôte.

L'invention concerne en outre un dispositif de communication et un système de communication permettant la mise en oeuvre de cette méthode, ainsi qu'une méthode permettant l'échange sécurisé de données entre deux dispositifs de communication.

Fig. 1

**Description**

DOMAINE TECHNIQUE

La présente invention est utilisée pour le chiffrement de données, en particulier pour le chiffrement de la voix, et éventuellement d'autres données, au moyen d'un module de chiffrement ayant une vitesse de chiffrement faible.

Plus spécifiquement, la présente invention concerne un dispositif de communication comportant un module de sécurité et un hôte. Elle concerne également un système de communication comportant au moins deux dispositifs de communication destinés à échanger des données sous forme sécurisée l'un avec l'autre, chaque dispositif de communication comportant un module de sécurité associé à un hôte. L'invention concerne en outre une méthode de traitement de données dans un dispositif de communication comportant un hôte et un module de sécurité associé à cet hôte. L'invention concerne également une méthode d'échange sécurisé de données entre au moins deux dispositifs de communication comportant chacun un hôte et un module de sécurité associé à cet hôte.

**ART ANTERIEUR**

Dans certains systèmes existants utilisés pour chiffrer des données telles qu'en particulier de la voix, on utilise un dispositif de communication formé d'un module de sécurité et d'un hôte. Le flux de données à chiffrer est reçu par l'hôte, puis envoyé au module de sécurité. Ce dernier chiffre les données et les renvoie à l'hôte lorsque le chiffrement est terminé. L'hôte peut alors transmettre ces données à un autre dispositif de communication.

Le transfert depuis l'hôte vers le module de sécurité, le chiffrement dans ce module et le renvoi depuis le module vers l'hôte nécessitent une durée relativement importante, ce qui introduit un temps de latence important. De plus, avec un module de sécurité ayant des capacités de chiffrement faibles, comme cela est par exemple le cas avec des cartes à puce conventionnelles, il peut y avoir un problème de débit si le chiffrement ne peut pas être fait aussi rapidement que le débit de la voix ou des données à transmettre.

Pour résoudre ce problème, une méthode de chiffrement a été développée. Selon cette méthode, deux dispositifs qui doivent échanger des données chiffrées génèrent une clé de session commune. Cette clé de session, généralement générée dans le module de sécurité, est transmise à un module d'extension de l'hôte correspondant. Ce module d'extension comporte une fonction d'extension qui génère une pluralité de clés à partir d'une clé initiale. Les clés ainsi générées sont utilisées pour chiffrer les données par un chiffrement de flux conventionnel. Ce procédé est connu sous l'appellation "Secure Real-time Transport Protocol" ou SRTP.

Bien que ce procédé fonctionne pour chiffrer des données telles que la voix, ce qui nécessite la génération d'un grand nombre de clés pendant des intervalles temporels courts, la connaissance de la clé de session pourrait compromettre la sécurité du système. En effet, l'hôte n'étant pas un élément placé dans un environnement sécurisé, il n'est pas exclu que la fonction d'extension puisse être trouvée et utilisée pour déchiffrer un contenu de façon illégale.

La présente invention se propose de réaliser un dispositif, un système et une méthode permettant d'améliorer la sécurité, tout en ayant un temps de latence faible.

EXPOSE DE L'INVENTION

La présente invention concerne un dispositif de communication tel que défini en préambule et caractérisée en ce que le module de sécurité comporte au moins un générateur de clés initiales utilisant une fonction de génération de clés initiales, en ce que l'hôte comporte des moyens de réception desdites clés initiales, un module d'extension et un module de combinaison, en ce que le module d'extension dispose d'une fonction d'extension agencée pour générer une pluralité de clés de chiffrement à partir de chacune desdites clés initiales, en ce que le module de combinaison comporte des moyens de réception de données et des moyens de réception desdites clés de chiffrement, et en ce que ce module de combinaison dispose d'une fonction de combinaison agencée pour combiner lesdites données avec lesdites clés de chiffrement.

Selon un mode de réalisation préféré, le dispositif de l'invention comporte des moyens pour déterminer le nombre de clés de chiffrement nécessaires pendant un intervalle temporel déterminé et des moyens pour adapter le nombre de clés de chiffrement générées pendant ledit intervalle temporel déterminé.

L'hôte comporte avantageusement une mémoire agencée pour mémoriser au moins une clé initiale reçue dudit module de sécurité.

Le dispositif de l'invention comporte avantageusement au moins un compteur.

La présente invention concerne également un système de communication tel que défini en préambule et caractérisé en ce que chaque module de sécurité comporte au moins un générateur de clés initiales disposant d'une fonction de génération de clés initiales, en ce que chaque hôte comporte des moyens de réception desdites clés initiales générées par le module de sécurité correspondant, en ce que chaque hôte comporte en outre un module d'extension et un module de combinaison, en ce que le module d'extension dispose d'une fonction d'extension agencée pour générer une pluralité de clés de chiffrement à partir de chacune desdites clés initiales reçues du module de sécurité correspondant, en ce que le module de combinaison comporte des moyens de réception de données à traiter et des moyens de réception desdites clés de chiffrement, et en ce que ce module de combinaison dispose d'une fonction de combinaison agencée pour combiner les données à traiter avec lesdites clés de chiffrement.

Selon un mode de réalisation particulier de l'invention, les fonctions de génération de clés initiales de deux modules de sécurité distincts sont différentes, les fonctions d'extension de deux hôtes distincts sont distinctes et la combinaison dans le module de combinaison de l'un des dispositifs de communication desdites clés provenant du module d'extension correspondant avec des données chiffrées provenant d'un autre dispositif de communication aboutit aux données en clair.

Selon une variante de l'invention, les fonctions de génération de clés initiales et les fonctions d'extension de deux dispositifs de communication différents sont telles que, en utilisant une clé de session identique, on aboutit à un flux de clés de chiffrement identiques.

L'invention concerne en outre une méthode de traitement de données telle que définie en préambule et caractérisée en ce qu'elle comporte les étapes suivantes :

- génération par le module de sécurité, d'une pluralité de clés initiales à partir d'une fonction de génération de clés initiales;
- transmission de ladite pluralité de clés initiales audit hôte correspondant;
- pour chaque clé initiale reçue par l'hôte, génération d'une pluralité de clés de chiffrement par un module d'extension dudit hôte, au moyen d'une fonction d'extension;
- réception des données à traiter par ledit hôte;
- combinaison desdites données à traiter avec lesdites clés de chiffrement, dans un module de combinaison dudit hôte.

Selon une forme de réalisation avantageuse de l'invention, la fonction de génération desdites clés initiales utilise une clé de session comme variable d'entrée. Cette clé de session est de préférence négociée entre au moins deux dispositifs de communication lors de l'établissement d'une communication entre ces deux dispositifs.

Selon une autre variante de réalisation, ladite clé de session est reçue par le module de sécurité d'une source externe.

Selon un mode de réalisation de l'invention, chaque clé initiale est associée à un index avant la transmission des clés initiales et des index à l'hôte correspondant.

Selon une variante particulière de l'invention, la fonction d'extension génère, pour chaque clé initiale reçue, un nombre prédéfini de clés de chiffrement.

Selon une autre variante, le nombre de clés de chiffrement générées pour une clé initiale dépend d'un paramètre dépendant des données à traiter. Ce paramètre peut être un débit de données ou une quantité de données notamment.

L'invention concerne encore une méthode d'échange sécurisé de données telle que définie en préambule et caractérisée en ce qu'elle comporte les étapes suivantes :

- génération de clés initiales dans ledit module de sécurité de chaque dispositif de communication, cette génération de clés initiales étant réalisée au moyen d'une fonction de génération de clés initiales;
- transmission desdites clés initiales générées depuis les modules de sécurité à l'hôte correspondant;
- à partir de chacune des clés initiales reçues par l'hôte, génération d'une pluralité de clés de chiffrement;
- réception de données à traiter, par l'un desdits hôtes; et
- combinaison desdites données à traiter avec les clés de chiffrement générées par cet hôte, dans un module de combinaison.

La génération des clés initiales utilise avantageusement une clé de session comme paramètre initial.

Selon un mode de réalisation particulier de l'invention, les clés initiales et la fonction d'extension de deux dispositifs de communication différents sont identiques.

Selon un autre mode de réalisation de l'invention les clés initiales de deux dispositifs de communication sont différentes, les fonctions d'extension desdits deux dispositifs de communication sont différentes et les clés générées à partir desdites clés initiales et de la fonction d'extension sont identiques pour lesdits deux dispositifs de communication différents.

L'hôte comporte avantageusement des moyens pour déterminer une quantité de clés par unité de temps à générer et des moyens pour agir sur la fonction d'extension en fonction du nombre de clés par unité de temps qui ont été déterminés par lesdits moyens pour déterminer une quantité de clés par unité de temps à générer. L'hôte comporte également avantageusement des moyens pour agir sur le nombre de clés initiales à générer par le module de sécurité correspondant.

Selon cette invention, lorsque plusieurs dispositifs de communication doivent échanger des données chiffrées, ils négocient tout d'abord une clé de session ou ils reçoivent une information d'une source externe sûre. A partir de cet élément, ils génèrent une pluralité de clés appelées clés initiales. Ces clés initiales sont transmises à un module qui comporte une fonction d'extension qui, à partir d'une clé initiale, génère plusieurs clés de chiffrement. Les clés de chiffrement ainsi générées sont utilisées pour chiffrer les données.

Selon un mode de réalisation, les clés initiales peuvent être identiques dans les différents dispositifs de communication. Dans ce cas, la sécurité est améliorée par rapport aux systèmes de l'art antérieur du fait que la connaissance de la clé de session ou de l'information provenant d'une source externe ne permet pas de calculer les clés qui sont utilisées pour le chiffrement.

Selon un autre mode de réalisation, les clés initiales sont différentes pour différents dispositifs de communication. Ces clés initiales différentes sont traitées de façon à aboutir à des clés de chiffrement identiques pour les différents dispositifs de communication participant une même communication. Dans ce cas comme dans le précédent, la sécurité est améliorée par rapport aux systèmes de l'art antérieur du fait que la connaissance de la clé de session ne permet pas de calculer des clés de chiffrement. En outre, la découverte des clés initiales utilisées dans un dispositif de communication ne permet pas de calculer des clés initiales concernant un autre dispositif de communication.

L'invention présente en outre l'avantage de s'adapter de façon très souple aux contraintes du chiffrement. En particulier, la quantité de clés générées pour chiffrer des données peut être adaptée de façon dynamique à la quantité de données à chiffrer. Ceci permet d'assurer qu'un nombre de clés suffisant est à disposition, ce qui implique qu'il n'y a pas d'augmentation du temps de latence. Cette invention est donc particulièrement bien adaptée au chiffrement de la voix, où le temps de latence et la disponibilité d'un nombre suffisant de clés et particulièrement important, même dans le cas où les capacités de chiffrement des dispositifs utilisés sont relativement faibles.

**BREVE DESCRIPTION DES DESSINS**

La présente invention et ses avantages seront mieux compris en référence aux figures annexées et à la description détaillée d'un mode de réalisation particulier, dans lesquelles :

- la figure 1 illustre schématiquement deux dispositifs selon la présente invention; et

- la figure 2 représente la méthode selon la présente invention.

**MANIERES DE REALISER L'INVENTION**

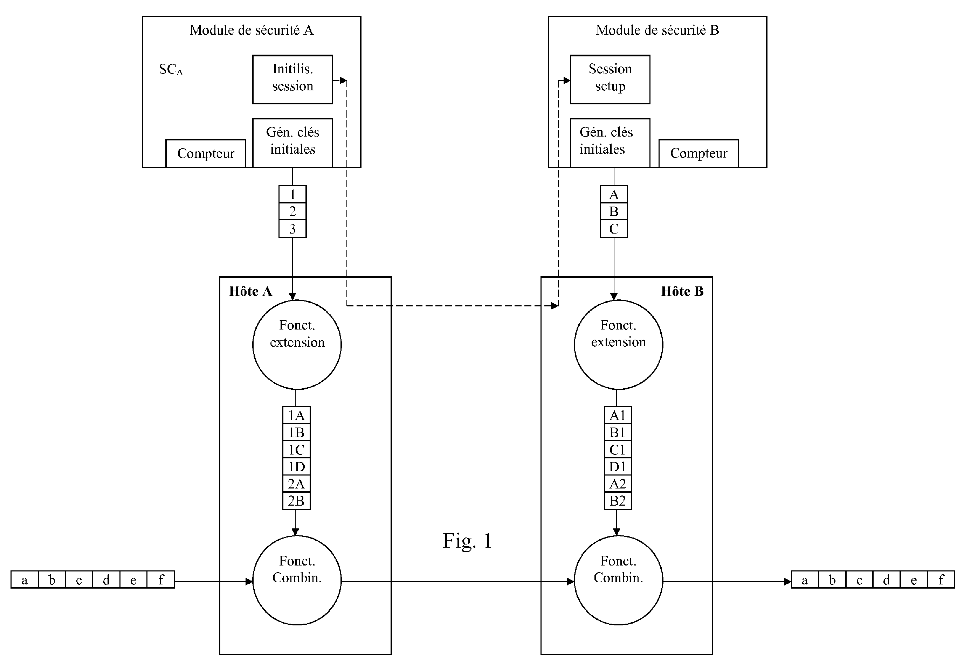

En référence aux figures, l'invention concerne notamment un système de communication formé de plusieurs dispositifs de communication. Chacun de ces dispositifs de communication comporte un hôte H et un module de sécurité SC qui peut par exemple être réalisé sous la forme d'une carte à puce ou d'un microprocesseur. L'hôte peut notamment prendre la forme d'un téléphone portable. Dans la figure 1, deux dispositifs de communication ont été représentés, l'un comportant un module de sécurité noté $SC_A$ et un hôte noté $H_A$, l'autre dispositif de communication comportant un module de sécurité noté $SC_B$ et un hôte noté $H_B$.

Le module de sécurité comprend au moins des moyens d'initialisation d'une communication et un générateur de clés initiales (Seed). Le module de sécurité comporte en outre des moyens de communication permettant de transmettre les clés initiales générées dans ce module de sécurité à l'hôte associé à ce module. Dans le mode de réalisation illustré, le module de sécurité comporte en outre un compteur dont la fonction est expliquée plus bas.

L'hôte comporte un module de calcul comprenant au moins une fonction d'extension $f_{ext}$. Cette fonction d'extension reçoit comme variable d'entrée, les clés initiales $K_i$ générées par le module de sécurité associé à cet hôte. La fonction d'extension est telle qu'à partir d'une clé initiale, plusieurs clés résultantes sont générées Une telle fonction d'extension pourrait par exemple être un chiffrement de flux (stream cypher) de type AES-CTR ou GRAIN, ou la combinaison d'un dérivateur de clés, utilisant par exemple une fonction cryptographique à sens unique telle que SHA256, qui alimente en clés un algorithme cryptographique symétrique tel que le AES pour le chiffrement et le déchiffrement des données.

L'hôte comporte en outre un module de combinaison, des moyens de réception de données et des moyens de transmission de données. En principe, un même dispositif est en mesure d'agir comme émetteur et comme récepteur. Dans le cas où le dispositif agit comme émetteur, les moyens de réception des données reçoivent des données à chiffrer et les moyens de transmission transmettent des données chiffrées à un autre dispositif de communication. Dans le cas où le dispositif agit comme récepteur, il reçoit des données chiffrées et se charge de les déchiffrer.

La description suivante se base sur un exemple dans lequel deux dispositifs de communication communiquent entre eux. Dans le cas où plus de deux dispositifs sont connectés lors d'une même communication, la méthode de l'invention reste la même, l'ensemble des dispositifs de communication utilisant cette même méthode.

Lorsque deux dispositifs de communication démarrent une communication, ils négocient une clé de session $S_k$ qui est en principe valable pour l'ensemble de la communication et qui est changée à chaque communication. La négociation de cette clé de session peut se faire de différentes façons connues qui ne sont pas expliquées en détail ici.

Selon une variante, en lieu et place d'une clé de session, il est également possible que les modules de sécurité reçoivent une information provenant d'une source externe sûre. Cette information permet notamment d'effectuer une authentification des dispositifs de communication avant le démarrage de la communication.

Par soucis de simplification, que la clé de session soit négociée entre les différents dispositifs de communication concernés, qu'elle soit générée à partir d'une information provenant d'une source externe ou qu'elle soit directement l'information provenant de la source externe, le terme de "clé de session" sera utilisé ici.

Cette clé de session $S_k$ est utilisée comme variable d'entrée du générateur de clés initiales du module de sécurité. Ce générateur de clés initiales utilise une fonction notée $f_{init}$, permettant de générer des clés qui sont différentes entre elles d'une part et qui sont différentes pour une clé de session différente. Une fonction qui permet de générer ces clés initiales pourrait par exemple être un chiffrement de flux (stream cypher) de type HC-128 ou GRAIN, ou un dérivateur de clés pseudo aléatoire utilisant une ou plusieurs fonctions cryptographiques à sens unique comme le SHA256.

Selon un mode de réalisation avantageux, le module de sécurité comporte un compteur. Les clés $K_i$ générées par le générateur de clé initiales peuvent être chiffrées au moyen d'une clé d'appariement entre le module de sécurité et l'hôte correspondant. Selon une variante, les clés initiales peuvent également être transmises à l'hôte sans chiffrement. Dans le cas où un compteur est prévu dans le module de sécurité, les clés sont envoyées dans des messages ayant comme en-tête, une valeur de compteur. Cette valeur de compteur est typiquement incrémentée d'une unité pour chaque message, de sorte que deux clés consécutives sont associées à deux valeurs consécutives du compteur. Au lieu d'une valeur incrémentale d'un compteur, les clés initiales peuvent être associées à une information de synchronisation différente, telle que par exemple une valeur d'index provenant d'une table. Cette information de synchronisation peut être publique.

Lorsqu'un message contenant une clé initiale est transmis à l'hôte correspondant, ce message est traité pour en extraire la clé initiale. Le traitement dépend ici du formatage du message. Dans le cas le plus simple, la clé initiale est transmise telle quelle. Elle peut être transmise simplement avec une valeur de compteur. Elle peut également être chiffrée, puis associée à une valeur de compteur. Dans ce dernier cas, il est nécessaire d'extraire la valeur du compteur, puis de déchiffrer le message de façon à obtenir la clé initiale.

Lorsqu'une clé initiale est ainsi obtenue, elle est transmise au module de calcul qui contient une fonction d'extension. Cette fonction d'extension a pour effet et pour tâche de générer plusieurs clés de chiffrement à partir d'une clé initiale.

Le nombre de clés de chiffrement que la fonction d'extension génère pour chaque clé initiale, nommé ratio d'extension, peut être fixé à l'avance et rester le même pendant toute la communication. Il peut également être fixé, mais varier durant un échange de données. Ce ratio pourrait par exemple être envoyé dans un message provenant d'un centre de gestion auquel les dispositifs de communication sont liés. Le ratio d'extension pourrait également dépendre d'une autre source, par exemple de la valeur de la clé initiale. A titre d'exemple, le nombre de clés de chiffrement générées pour une clé initiale pourrait être égal à la valeur correspondant aux quatre bits de poids faible de la clé initiale. Ce ratio pourrait également dépendre des besoins liés à la quantité de données à chiffrer. Ainsi, pendant un échange de données, lorsqu'il y a peu de données à chiffrer, le besoin en clés est faible et le nombre de clés de chiffrement générées pour une clé initiale peut également être faible. A contrario, pendant les périodes de cet échange de données pendant lesquelles de nombreuses données sont à chiffrer, il est nécessaire de générer un plus grand nombre de clés de chiffrement. Le nombre de clés de chiffrement générées pour chaque clé initiale sera alors augmenté. Cette adaptation du nombre de clés de chiffrement générées peut se faire de façon dynamique, pour être adapté aux besoins spécifiques à chaque instant. A cet effet, une information concernant la quantité de clés de chiffrement nécessaires est envoyée au module de calcul de façon à adapter la fonction d'extension.

La modification du ratio d'extension peut être communiquée par le dispositif de communication aux autres dispositifs avec lesquels il communique soit avant de modifier ce ratio, soit au moment où le ratio est modifié.

Le ratio d'extension peut être modifié en cas de changement de conditions d'utilisation, par exemple lors du passage d'une communication normale entre deux dispositifs de communication à une conférence téléphonique à plus de deux dispositifs. Si le changement de ratio d'extension n'est pas communiqué en avance, un temps de latence est introduit, ce temps de latence n'existant que pour le premier chiffrement de données arrivant après le changement de ratio.

Les clés de chiffrement générées par le module de calcul utilisant la fonction d'extension $f_{ext}$ ont en principe une taille fixe prédéfinie. Selon un mode de réalisation avantageux, les données à chiffrer sont séparées en paquets ayant également une taille fixe prédéfinie, cette taille étant identique à la taille des clés.

Les données à chiffrer séparées en paquets ainsi que les clés de chiffrement sont transmises au module de combinaison. Ce module de combinaison se charge alors de chiffrer les données au moyen des clés de chiffrement. Selon un mode de réalisation avantageux, le chiffrement des données se fait au moyen d'une fonction OU exclusif XOR. Une telle fonction a l'avantage d'offrir un chiffrement très rapide. De plus, l'application d'une clé ayant servi au chiffrement d'une donnée sur cette donnée chiffrée aboutit à la donnée en clair. Lorsque des données chiffrées sont envoyées d'un premier dispositif de communication à un deuxième dispositif de communication, le module de combinaison peut appliquer aux données chiffrées, les clés de chiffrement ayant servi au chiffrement des données et obtenir ainsi les données en clair.

La clé de session $S_k$ est en principe commune entre les dispositifs de communication qui participent à une même communication. Selon un premier mode de réalisation, les clés initiales générées par ces dispositifs de communication sont les mêmes et les clés de chiffrement générées par la fonction d'extension sont également les mêmes. Dans ce cas, les données chiffrées reçues par l'un des dispositifs sont combinées avec les clés de chiffrement et le dispositif de communication obtient ainsi les données en clair.

Selon une variante, la clé de session est la même pour tous les dispositifs participant à la communication, mais les clés initiales et la fonction d'extension ne sont pas les mêmes. Afin de pouvoir déchiffrer les données chiffrées, il est important que les clés générées par le dispositif jouant le rôle d'émetteur correspondent aux clés générées par le dispositif jouant le rôle de récepteur. Dans la pratique, ces clés sont identiques.

Selon un mode de réalisation concret, chaque dispositif de communication doit comporter deux fonctions, à savoir une fonction de génération de clés initiales mise en oeuvre dans le module de sécurité et une fonction d'extension mise en oeuvre dans l'hôte. Ces deux fonctions doivent être complémentaires de telle sorte que l'application consécutive des deux fonctions sur un même ensemble de valeurs initiales aboutit à un résultat identique pour deux dispositifs de communication différents, mais que le résultat de l'application de la première fonction sur un même ensemble de valeurs initiales dans deux dispositifs de communication différents aboutit à un résultat différent.

Un tel ensemble de fonction peut par exemple être formé des éléments suivants : Si $f_{initA}$ est la fonction d'extension des clés initiales dans le module de sécurité $SC_A$, et $f_{initB}$ est la fonction d'extension des clés initiales dans le module de sécurité $SC_b$, $f_{initA}$ peu générer un flux de clé pour l'hôte A avec une combinaison au moyen d'une fonction OU Exclusif

$$K_i \text{ xor } HC128(\text{seed B},\ldots)$$

où seed B est une valeur d'initialisation,
et $f_{initB}$ peu générer un flux de clé pour l'hôte B avec une combinaison au moyen d'une fonction OU Exclusif

$$K_i \text{ xor } HC128(\text{seed A},\ldots)$$

où seed A est une autre valeur d'initialisation.

Appelons $f_{extA}$ la fonction d'extension dans l'hôte $H_A$. On peut avoir :

$$f_{extA} = AES\text{-}CTR \ (f_{initA} \text{ xor } HC128(\text{seed A},\ldots))$$

et

$$f_{extB} = AES\text{-}CTR \ (f_{initB} \text{ xor } HC128(\text{seed B},\ldots))$$

On a

$$f_{extA}(f_{initA}) = f_{extB}(f_{initB})$$

Le nombre de clés qu'il faut utiliser pour chiffrer des données dépend bien entendu de la quantité de données à chiffrer. De plus, un paramètre important est le nombre de clés à utiliser par unité de temps. Dans certaines configurations, le nombre de clés par unité de temps est fixe pour toutes les communications. Dans ce cas, il est simplement nécessaire de déterminer le nombre de clés initiales par unité de temps que le module de sécurité est capable de générer. Il suffit ensuite de paramétrer la fonction d'extension ou en d'autres termes, de choisir le ratio d'extension, de telle sorte qu'à partir des clés initiales, elle génère un nombre de clés par unité de temps suffisant pour répondre aux besoins de l'application.

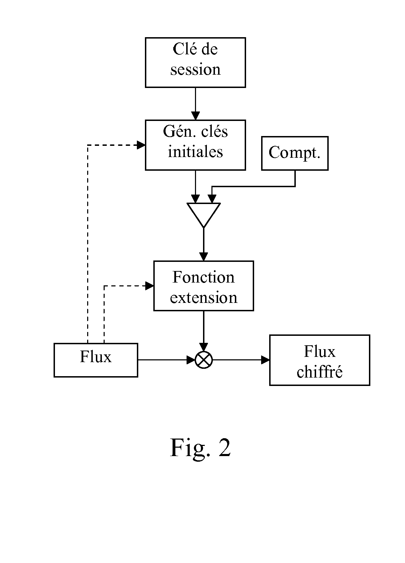

Dans d'autres configurations, le nombre de clés à générer par unité de temps est variable. Dans ce cas, plusieurs modes de réalisation différents sont possibles. Selon un premier mode de réalisation, il est possible de maintenir fixe, le nombre de clés par unité de temps générées par le module de calcul, ce nombre de clés étant proche du nombre maximal de clés requis. Il est également possible de faire varier des paramètres de la fonction d'extension, en particulier le ratio d'extension. Cette variation peut être dynamique et correspondre aux quantités de données à chiffrer. Pour permettre ceci, comme cela est illustré par la figure 2, une information provenant des données à chiffrer est renvoyée au module de calcul qui va adapter la fonction d'extension selon les besoins. Ces quantités de clés de chiffrement par unité de temps peuvent être comparées à un débit de données à chiffrer.

Le nombre de clés de chiffrement à générer est une valeur absolue et peut être comparé à une quantité, plutôt qu'à un débit. Ce nombre de clés dépend de la quantité absolue de données à traiter. A priori, cette quantité n'est pas connue au départ, ce qui implique qu'il est difficile de connaître à l'avance le nombre de clés initiales à générer et le nombre de clés de chiffrement à générer à partir de ces clés initiales.

Plusieurs variantes sont envisageables pour résoudre ce problème. Selon une première variante, le nombre de clés initiales n'est pas déterminé à l'avance. Des clés initiales sont générées en fonction des capacités du module de sécurité jusqu'à ce qu'une information telle qu'une indication de fin de communication indique l'arrêt de la génération des clés initiales.

Selon une autre variante, un nombre fixe de clés initiales est prévu, ce nombre pouvant être toujours le même, ou être spécifié lors de l'initiation d'une communication par exemple. Dans le cas où toutes les clés initiales ont été utilisées, il est possible par exemple de redéfinir une nouvelle quantité de clés initiales. Il est également possible d'utiliser par exemple la dernière clé initiale jusqu'à la fin de la communication.

Selon encore une autre variante, l'hôte renvoie une information au module de sécurité, cette information permettant à ce module de sécurité de déterminer la quantité de clés initiales qu'il doit générer. Cette indication est en général dynamique, ce qui signifie qu'elle est transmise périodiquement au module de sécurité.

Il est important que les changements de clés lors du chiffrement et du déchiffrement soient synchronisés, faute de quoi, le déchiffrement ne pourrait pas être réalisé. Plusieurs méthodes sont envisageables pour réaliser ceci. Dans certaines de ces méthodes, les dispositifs de communication n'échangent pas d'informations entre eux. Ils utilisent des données qui sont connues des différentes entités qui communiquent entre elles. Selon une première variante, le nombre de paquets utilisés pour chaque clé de chiffrement est fixe et connu par les dispositifs qui participent à la communication. Dans ce cas, il est inutile d'échanger des informations de synchronisation. Seul le début de la communication doit être indiqué.

Selon une autre variante, le nombre de paquets que chaque clé chiffre dépend d'une valeur connue des dispositifs de communication, cette valeur pouvant varier au cours de la communication. Une telle valeur pourrait par exempole être les trois bits de poids faible de la dernière clé. Une autre variante similaire pourrait utiliser des informations liées à la clé de session puisque cette clé de session est connue des différentes entités qui participent à la communication. Une variante différente pourrait utiliser une information liée à un signal d'horloge.

Dans certaines autres méthodes de synchronisation, une information de synchronisation est échangée entre les dispositifs. Cette information de synchronisation pourrait par exemple être la valeur du compteur provenant de l'un des modules de sécurité ou la valeur de l'index mentionné précédemment. L'information de synchronisation pourrait également être une commande provenant de l'un des dispositifs de communication et indiquant à l'autre dispositif à quel moment il doit changer de clé de chiffrement.

La présente invention permet donc de chiffrer de façon efficace et avec un temps de latence réduit, des données exigeant des capacités de chiffrement qui peuvent être importantes, sur la base d'un module de sécurité ayant des capacités de chiffrement relativement faibles.

**Revendications**

1. Dispositif de communication comportant un module de sécurité (SC) et un hôte (H), **caractérisé en ce que** le module de sécurité (SC) comporte au moins un générateur de clés initiales ($K_i$) utilisant une fonction ($f_1$) de génération de clés initiales, **en ce que** l'hôte (H) comporte des moyens de réception desdites clés initiales ($K_i$), un module d'extension et un module de combinaison, **en ce que** le module d'extension dispose d'une fonction d'extension ($f_{ext}$) agencée pour générer une pluralité de clés de chiffrement à partir de chacune desdites clés initiales, **en ce que** le module de combinaison comporte des moyens de réception de données et des moyens de réception desdites clés de chiffrement, et **en ce que** ce module de combinaison dispose d'une fonction de combinaison agencée pour combiner lesdites données avec lesdites clés de chiffrement.

2. Dispositif de communication selon la revendication 1, **caractérisé en ce qu'**il comporte des moyens pour déterminer le nombre de clés de chiffrement nécessaires pendant un intervalle temporel déterminé et des moyens pour adapter le nombre de clés de chiffrement générées pendant ledit intervalle temporel déterminé.

3. Système de communication comportant au moins deux dispositifs de communication destinés à échanger des données sous forme sécurisée l'un avec l'autre, chaque dispositif de communication comportant un module de sécurité associé à un hôte, ce système étant **caractérisé en ce que** chaque module de sécurité comporte au moins un générateur de clés initiales disposant d'une fonction de génération de clés initiales, **en ce que** chaque hôte comporte des moyens de réception desdites clés initiales générées par le module de sécurité correspondant, **en ce que** chaque hôte comporte en outre un module d'extension et un module de combinaison, **en ce que** le module d'extension dispose d'une fonction d'extension agencée pour générer une pluralité de clés de chiffrement à partir de chacune desdites clés initiales reçues du module de sécurité correspondant, **en ce que** le module de combinaison comporte des moyens de réception de données à traiter et des moyens de réception desdites clés de chiffrement, et **en ce que** ce module de combinaison dispose d'une fonction de combinaison agencée pour combiner les données à traiter avec lesdites clés de chiffrement.

4. Système de communication selon la revendication 3, **caractérisé en ce que** les fonctions de génération de clés initiales de deux modules de sécurité distincts sont différentes, **en ce que** les fonctions d'extension de deux hôtes distincts sont différentes et **en ce que** la combinaison dans le module de combinaison de l'un des dispositifs de communication desdites clés provenant du module d'extension correspondant avec des données chiffrées provenant d'un autre dispositif de communication aboutit aux données en clair.

5. Système de communication selon la revendication 3, **caractérisée en ce que** les fonctions de génération de clés initiales et les fonctions d'extension de deux dispositifs de communication différents sont telles que, en utilisant une clé de session identique, on aboutit à un flux de clés de chiffrement identiques.

6. Méthode de traitement de données dans un dispositif de communication comportant un hôte et un module de sécurité associé à cet hôte, cette méthode comportant les étapes suivantes :

   • génération par le module de sécurité, d'une pluralité de clés initiales à partir d'une fonction de génération de clés initiales;
   • transmission de ladite pluralité de clés initiales audit hôte correspondant;
   • pour chaque clé initiale reçue par l'hôte, génération d'une pluralité de clés de chiffrement par un module d'extension dudit hôte, au moyen d'une fonction d'extension;
   • réception des données à traiter par ledit hôte;
   • combinaison desdites données à traiter avec lesdites clés de chiffrement, dans un module de combinaison dudit hôte.

7. Méthode de traitement de données selon la revendication 6, **caractérisé en ce que** la fonction de génération desdites clés initiales utilise une clé de session comme variable d'entrée.

8. Méthode de traitement de données selon la revendication 6, **caractérisé en ce que** chaque clé initiale est associée à un index avant la transmission des clés initiales et des index à l'hôte correspondant.

9. Méthode de traitement de données selon la revendication 6, **caractérisé en ce que** le nombre de clés de chiffrement générées pour une clé initiale dépend d'un paramètre dépendant des données à traiter.

10. Méthode de traitement de données selon la revendication 9, **caractérisé en ce que** le paramètre dépendant des données à traiter est un débit de données.

11. Méthode de traitement de données selon la revendication 9, **caractérisé en ce que** le paramètre dépendant des données à traiter est une quantité de données.

12. Méthode d'échange sécurisé de données entre au moins deux dispositifs de communication comportant chacun un hôte et un module de sécurité associé à cet hôte, cette méthode comportant les étapes suivantes :

• génération de clés initiales dans ledit module de sécurité de chaque dispositif de communication, cette génération de clés initiales étant réalisée au moyen d'une fonction de génération de clés initiales;

• transmission desdites clés initiales générées depuis les modules de sécurité à l'hôte correspondant;

• à partir de chacune des clés initiales reçues par l'hôte, génération d'une pluralité de clés de chiffrement;

• réception de données à traiter, par l'un desdits hôtes; et

• combinaison desdites données à traiter avec les clés de chiffrement générées par cet hôte, dans un module de combinaison.

**13.** Méthode d'échange sécurisé de données selon la revendication 12, **caractérisée en ce que** les clés initiales de deux dispositifs de communication sont différentes, **en ce que** les fonctions d'extension desdits deux dispositifs de communication sont différentes et **en ce que** les clés générées à partir desdites clés initiales et de la fonction d'extension sont identiques pour lesdits deux dispositifs de communication différents.

**14.** Méthode d'échange sécurisé de données selon la revendication 12, **caractérisée en ce que** l'hôte comporte des moyens pour déterminer une quantité de clés par unité de temps à générer et des moyens pour agir sur la fonction d'extension en fonction du nombre de clés par unité de temps qui ont été déterminés par lesdits moyens pour déterminer une quantité de clés par unité de temps à générer.

**15.** Méthode d'échange sécurisé de données selon la revendication 12, **caractérisée en ce que** l'hôte comporte des moyens pour agir sur le nombre de clés initiales à générer par le module de sécurité correspondant.

Fig. 1

Module de sécurité A

SC_A

Initilis. session

Compteur

Gén. clés initiales

1
2
3

Hôte A

Fonct. extension

1A
1B
1C
1D
2A
2B

Fonct. Combin.

Module de sécurité B

Session setup

Gén. clés initiales

Compteur

A
B
C

Hôte B

Fonct. extension

A1
B1
C1
D1
A2
B2

Fonct. Combin.

| a | b | c | d | e | f |

| a | b | c | d | e | f |

EP 3 035 583 A1

Fig. 2

Europäisches
Patentamt

European
Patent Office

Office européen
des brevets

## RAPPORT DE RECHERCHE EUROPEENNE

Numéro de la demande

EP 14 19 9456

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/062384 A1 (DONDETI LAKSHMINATH R [US] DONDETI LAKSHMINATH [US]) 23 mars 2006 (2006-03-23) * abrégé * * alinéas [0010] - [0011] * * alinéas [0019] - [0055] * ----- | 1-15 | INV. H04L9/06 |
| A | US 2012/033804 A1 (SOQUET PATRICK [FR]) 9 février 2012 (2012-02-09) * abrégé * * alinéas [0014] - [0059] * ----- | 1-15 | |
| A | EP 1 693 982 A2 (TECSEC INC [US]) 23 août 2006 (2006-08-23) * abrégé * * alinéas [0010] - [0024] * ----- | 1-15 | |

DOMAINES TECHNIQUES
RECHERCHES (IPC)

H04L

Le présent rapport a été établi pour toutes les revendications

| Lieu de la recherche | Date d'achèvement de la recherche | Examinateur |
|---|---|---|
| Munich | 25 juin 2015 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 19 9456

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-06-2015

| Document brevet cité au rapport de recherche | | Date de publication | Membre(s) de la famille de brevet(s) | | Date de publication |
|---|---|---|---|---|---|
| US 2006062384 | A1 | 23-03-2006 | US | 2006062384 A1 | 23-03-2006 |
|  |  |  | US | 2014192979 A1 | 10-07-2014 |
| US 2012033804 | A1 | 09-02-2012 | CN | 102282797 A | 14-12-2011 |
|  |  |  | EP | 2377264 A1 | 19-10-2011 |
|  |  |  | FR | 2941114 A1 | 16-07-2010 |
|  |  |  | RU | 2011134082 A | 20-02-2013 |
|  |  |  | TW | 201031166 A | 16-08-2010 |
|  |  |  | US | 2012033804 A1 | 09-02-2012 |
|  |  |  | WO | 2010081631 A1 | 22-07-2010 |
| EP 1693982 | A2 | 23-08-2006 | AUCUN | | |

EPO FORM P0460

Pour tout renseignement concernant cette annexe : voir Journal Officiel de l'Office européen des brevets, No.12/82